# EUROPÄISCHE PATENTANMELDUNG

(11) **EP 4 488 034 A1**
(43) Veröffentlichungstag der Anmeldung: **08.01.2025**
(21) Anmeldenummer: 24185829.9
(22) Anmeldetag: 01.07.2024
(51) Int. Cl.: B29C 64/106, B29C 64/209, B29C 64/227, B29C 64/245, B29C 64/393, B33Y 10/00, B33Y 30/00

(54) **VORRICHTUNG FÜR DREIDIMENSIONALE ADDITIVE DRUCKOPERATIONEN UND VERFAHREN ZUM STEUERN EINER VORRICHTUNG**

(30) Priorität: 30.06.2023 DE 102023117306; 09.12.2023 DE 102023134519
(71) Anmelder: Waldbillig, Max, 12439 Berlin (DE); Czinki, Alexander, 63739 Aschaffenburg (DE)
(72) Erfinder: Waldbillig, Max, 12439 Berlin (DE); Czinki, Alexander, 63739 Aschaffenburg (DE)
(74) Vertreter: Raunecker, Klaus Peter

(57) **Zusammenfassung**

Die Erfindung betrifft ein Verfahren und eine Vorrichtung (1) für dreidimensionale additive Druckoperationen mit mindestens einem Drucckopf (2) und mit einer Werkstückauflage (3), auf der mittels des Drucckopfs (2) sowie anhand von Steuerbefehlen mindestens einer Steuereinheit ein Werkstück herstellbar ist. In einem Druckbereich (6) ist Druckmaterial aus dem Druckkopf (2) auf die Werkstückauflage (3) und/oder auf das Werkstück aufbringbar. Dabei ist die Werkstückauflage (3) entlang mindestens einer Werkstückachse (8) verlagerbar und/oder um die mindestens eine Werkstückachse (8) drehbar. Um konstruktiv einfach und effizient dreidimensionale additive Druckvorgänge mit hoher Werkstückqualität zu ermöglichen, kann vorgesehen sein, dass der mindestens eine Druckkopf (2) entlang einer zur Werkstückachse geneigten Druckachse (9) verlagerbar ist. Die geneigte Druckachse (9) ermöglicht es, das Druckmaterial (7) im Schnittpunkt der (kegelförmigen) Bearbeitungsfläche und der Bewegungsachse aufzutragen. Demnach ist insbesondere der zeitgleiche und kollisionsfreie Betrieb von mehreren Druckköpfen (2) auf getrennten, über dem Umfang der Kegelflächen verteilten Arbeitsbereichen möglich.

## Beschreibung

Die Erfindung betrifft eine Vorrichtung für dreidimensionale additive Druckoperationen mit mindestens einem Druckkopf und mit einem Werkstückträger, auf der mittels des Druckkopfs sowie anhand von Steuerbefehlen mindestens einer Steuereinheit ein Werkstück herstellbar ist, wobei in einem Druckbereich Druckmaterial aus dem Druckkopf auf den Werkstückträger und/oder auf das Werkstück aufbringbar ist und wobei der Werkstückträger entlang mindestens einer Werkstückachse verlagerbar ist und/oder um die mindestens eine Werkstückachse drehbar ist.

Die Erfindung betrifft auch ein Verfahren zum Steuern einer Vorrichtung für dreidimensionale additive Druckoperationen mit mindestens einem Druckkopf und mit einem Werkstückträger, auf der mittels des Druckkopfs sowie anhand von Steuerbefehlen mindestens einer Steuereinheit ein Werkstück herstellbar ist, wobei der Druckkopf zum Werkstückträger hin in einen Druckbereich verlagert wird, wobei anschließend ein Druckmaterial mittels einer Druckdüse des Druckkopfs auf der Werkstückträger und/oder das Werkstück aufgebracht wird während der Werkstückträger entlang mindestens einer Werkstückachse verlagert wird und/oder um die mindestens eine Werkstückachse gedreht wird.

Dreidimensionale additive Druckverfahren umfassen eine Vielzahl von Technologien, bei denen Bauteile anhand eines vorprogrammierten 3D-Datenmodels schichtweise sukzessive aufgebaut werden. Der Vorteil dieser Verfahren liegt darin, dass CAD-Daten direkt, schnell und ohne spezielles Werkzeug in ein Bauteil überführt werden können. Dabei wird das komplette Bauteil in einem Druckvorgang hergestellt, im Gegensatz zu konventionellen Herstellungsverfahren, bei denen meist mehrere aufeinander folgende Herstellungsschritte zur Bauteilherstellung notwendig sind. Gleichzeitig besteht dabei eine sehr große Geometrie- und Gestaltfreiheit.

Um den Druckvorgang zu optimieren, effizienter zu gestalten und die Werkstückqualität zu erhöhen, werden üblicherweise die einzelnen Druckparameter verändert. Es sind beispielsweise Vorrichtungen für dreidimensionale additive Druckoperationen insbesondere für großvolumige Bauteile bekannt, die mindestens einen Druckkopf und einen Werkstückträger aufweisen. Der Werkstückträger einer Vorrichtung der genannten Art ist üblicherweise um mindestens eine Rotationsachse bewegbar und der mindestens eine Druckkopf entlang von zwei parallel zu der Ebene des Werkstückträgers liegenden Achsen relativ zu dem Werkstückträger verfahrbar. Die erste Achse verläuft im wesentlichen radial zu der mindestens einen Rotationsachse des Werkstückträgers und die zweite Achse verläuft entweder im wesentlichen tangential zu der ersten Achse oder wirkt um die Rotationsachse des Werkstückträgers schwenkend. Nachteilig beispielsweise an diesem Ansatz ist, dass er nur rechenintensiv und kostenintensiv umzusetzen ist.

Es ist eine Aufgabe der Erfindung eine Vorrichtung der genannten Art bereitzustellen, mit der konstruktiv einfach und effizient dreidimensionale additive Druckvorgänge mit hoher Werkstückqualität ermöglicht werden.

Die Aufgabe wird erfindungsgemäß durch eine Vorrichtung gemäß des unabhängigen Anspruchs 1 gelöst, die dadurch gekennzeichnet ist, dass der mindestens eine Druckkopf entlang einer zur Werkstückachse geneigten Druckachse verlagerbar ist. Mit der geneigten Druckachse des Druckkopfes werden die nur rechenintensiv zu bestimmenden Freiheitsgrade für den Druckkopf erheblich reduziert und die Druckvorgänge können schneller und effizienter durchgeführt werden. Das Werkstück wird in dem Druckbereich hergestellt durch eine Kombination der Verlagerung des Werkstückträgers entlang der Werkstückachse und/oder dessen Drehung um die Werkstückachse und/oder der Verlagerung des Druckkopfes entlang seiner Druckachse auf seiner Druckkopfbahn. Dabei kann der Druckkopf soweit in Richtung der Werkstückachse verfahren werden, dass seine Druckdüse die Werkstückachse erreicht.

Optional oder alternativ kann vorgesehen sein, dass die Druckkopfbahnen entlang der Werkstückachse verlagert werden, um den selben Bereich des Werkstücks zu erreichen.

Der Schenkelwinkel zwischen der Werkstückachse und der Druckachse ist ein erfindungsgemäßer Druckparameter: Ein kleiner Schenkelwinkel ist vorteilhaft bei Übergängen des Werkstücks nach außen von der Werkstückachse weg; ein großer Schenkelwinkel ist vorteilhaft bei Übergängen des Werkstücks nach innen zu der Werkstückachse hin. Der Schenkelwinkel weist erfindungsgemäß einen Winkel größer oder ungleich 0 sowie kleiner oder ungleich 90 Grad auf. In vielen Ausführungsformen der Erfindung wird er vorzugsweise zwischen 25° und 75° betragen.

Die Festlegung des Winkels kann mit Rücksicht auf die zu fertigenden Bauteile festgelegt sein oder alternativ so bestimmt sein, dass dieser qualitäts- und/oder ökonomischen Zielen besonders gerecht wird. Dabei kann der Schenkelwinkel nach der erfindungsgemäßen Vorrichtung an das zu druckende Werkstück angepasst und für dieses eingestellt werden. Vorzugsweise weist der Schenkelwinkel einen Wert zwischen 0° und 90°, vorteilhafterweise zwischen 10° und 80° und besonders vorteilhafterweise zwischen 20° und 70°, auf.

Bei einem überwiegend rotationssymmetrischen Werkstück oder bei den wesentlichen rotationssymmetrischen Bestandteilen des Werkstücks können andere Druckparameter, wie beispielsweise die Druckgeschwindigkeit, erhöht werden. Durch die mögliche Rotation des Werkstücks während des Druckvorgangs können optional die einzelnen Schichten des Druckmaterials spiralförmig in beide Drehrichtungen sowie gleichförmig aufgetragen werden. Erfindungsgemäß können größere Überhänge des Werkstücks mit einem reduzierten Verbrauch des Druckmaterials, einer reduzierten Druckzeit und einer reduzierten Nachbearbeitung des Werkstücks durchgeführt werden. Vorzugsweise besteht das Druckmaterial aus Polylactide (PLA) oder einem anderen Thermoplast.

Die zur Werkstückachse geneigte Druckachse bietet erfindungsgemäß den Vorteil, dass bei vertikalen Wandungen der zu druckende Werkstückquerschnitt vergrößert ist im Vergleich zu einem Druckvorgang parallel zu einer im Wesentlichen horizontalen Grundebene des Werkstücks. Das dazu optional drehende Werkstück um die Werkstückachse bewirkt, dass aufgetragene Bahnen des Druckmaterials auf dem Werkstückträger und/oder auf dem (teilweise) schon gedruckten Werkstück sich beim Abkühlen zur Werkstückachse hin verkürzen und schrumpfen, sodass sich frische konzentrische Bahnen des Druckmaterials auf bereits gedruckte und (teilweise) abgekühlte Bahnen aufbringen lassen - die Haftung zwischen den Ebenen des Druckmaterial an dem Werkstück wird dadurch verstärkt. Bei einer planaren Schichtung hingegen führt dieser Effekt beispielsweise zu einer Verformung des Werkstücks oder einem Ablösen der einzelnen Schichten des Druckmaterials voneinander bzw. zur Ablösung der Schichten von dem Werkstückträger.

Vorzugsweise kann nach einer Ausführungsform der Erfindung vorgesehen sein, dass der Druckkopf mit seiner Druckdüse in Richtung der Druckachse mindestens bis zur Werkstückachse verlagerbar ist. Optional dazu kann vorgesehen sein, dass der Druckkopf mit seiner Druckdüse in Richtung der Druckachse mindestens bis unterhalb des Werkstückträgers verlagerbar ist.

Der Druckkopf weist mindestens eine Druckmaterialzufuhr sowie die Druckkopfdüse auf, mit der das Druckmaterial mittels der Druckmaterialzufuhr auf den Werkstückträger und/oder das Werkstück aufgebracht werden kann. Dabei können die Druckdüsen einen mantelförmigen Arbeitsbereich des Druckbereichs mittels des Druckkopfes erreichen.

Den Druckkopf mit seiner Druckdüse bis zur Werkstückachse und darüber hinaus bzw. bis unter das Werkstück verlagern zu können, hat den Vorteil, dass so genannte "warping"-Effekte, d.h. thermische Verformungen von Teilen des Werkstück beim Druckvorgang reduziert werden können, wenn das Aufbringen des Druckmaterials in diesem Bereich des Werkstücks beim Druckvorgang abgeändert wird im Vergleich zur statischen CAD-Vorlage des Werkstücks.

Nach einer besonders vorteilhaften Ausgestaltung der Erfindung kann vorgesehen sein, dass mindestens zwei Druckköpfe entlang zumindest einer Kegelmantelfläche um den Druckbereich herum angeordnet sind, wobei jeder Druckkopf entlang seiner Druckachse verlagerbar ist.

Die erfindungsgemäße Anordnung und somit Reduktion der Freiheitsgrade im dreidimensionalen Raum pro Druckkopf ermöglicht bei mehren Druckköpfen einen kollisionsfreien Druckvorgang. Die erfindungsgemäße Anordnung der Druckachsen, welche sich in (nur) einem Punkt schneiden können, ermöglicht es, dass durch mechanische oder steuerungs- bzw. regelungstechnische Maßnahmen auf einfache Weise sichergestellt werden kann, dass die Druckköpfe sich in diesem einem Punkt nicht gleichzeitig befinden können. Die Druckköpfe können eine Position einnehmen, in welcher sie im Bereich des Schnittpunktes Material auftragen können ohne dabei in Kollision zu geraten.

Die Druckköpfe können sich an der Werkstückachse derart nah annähern, dass von allen Druckköpfen der gesamte Druckbereich kollisionsfrei bedient werden kann. Da keine Ressourcen auf die Überwachung von Kollisionen der Druckköpfe verschwendet werden müssen, können die Druckoperationen schneller und weniger rechenintensiv ausgeführt werden. Die Druckköpfe müssen ihre Druckoperationen auch nicht pausieren, wenn ein anderer Druckkopf in dem Bereich des anderen Drucckopf aktiv ist.

Dabei sind die Druckköpfe und ihre Druckdüsen so auf den Schenkelwinkel (β) abgestimmt, dass die Druckdüsen denselben Druckpunkt erreichen können, ohne dass die Druckköpfe mittelbar oder unmittelbar räumlich kollidieren.

Der Vorteil mehrerer Druckköpfe, die erfindungsgemäß entlang einer geneigten Druckachse verlagerbar sind, ist, dass die Druckköpfe zeitgleich zum Einsatz kommen können, ohne dass für diese eine Kollisionsgefahr besteht oder einer der beteiligten Druckköpfe zur Vermeidung von Kollisionen deaktiviert bzw. räumlich eingeschränkt werden muss. Weitere Vorteile können sein, mehrere Schichten zeitgleich übereinander anordnen zu können, thermischen Verzug von Bauteilen kompensieren zu können und Fehler- bzw. Toleranzen im Druckverlauf erfassen und unmittelbar korrigieren zu können.

Optional kann vorgesehen sein, dass die Druckkopfbahnen der Druccköpfe entlang ihrer Druckachsen höhenversetzt in Bezug auf den mantelförmigen Arbeitsbereich angeordnet sind, sodass die verschiedenen Druckköpfe auf unterschiedlichen Höhenebenen das Druckmaterial auf das zu druckende Werkstück aufbringen können. Denkbar ist, dass ein Druckkopf den Schichtauftrag des Druckmaterials auf die zuvor gedruckte, kegelförmige Arbeitsfläche beginnend von einem Spitzenbereich derselben in Richtung vergrößerndem Durchmesser füllt und ein zweiter - z.B. in Bezug auf die Bauteilmittelachse gegenüberliegender - Druckkopf die aufzutragende Kegelfläche beginnend mit deren größten Durchmesser füllt. Vorzugsweise sind die Druckköpfe senkrecht zum mantelförmigen Arbeitsbereich entlang der Druckachse versetzbar.

Vorzugsweise kann nach einem Aspekt der Erfindung vorgesehen sein, dass die Druckdüsen der mindestens zwei Druckköpfe unterschiedlich gestaltete Druckdüsen aufweisen. Mit den jeweils unterschiedlichen Druckdüsen, die unterschiedliche Düsendurchmesser, Düsengeometrien u.s.w. aufweisen können, können beispielsweise Kombinationen von Druckmaterialien und Farben - auch ohne einen Druckdüsenwechsel - auf das zu druckende Werkstück aufgebracht werden. Denkbar sind hier zum Beispiel lineare, runde oder ovale Druckdüsen. Mittels einer Anordnung mit mehreren Düsen sind beispielsweise auch - alternativ oder gemeinsam - unterschiedliche Materialien auftragbar.

Alternativ können zusätzlich zu dem oder den druckmaterialauftragenden Druckköpfen auch solche zum Einsatz kommen, die eine Nachbearbeitung, Veredelung und/oder sensorische Erfassung der aufgetragenen Schichten des Werkstücks ermöglichen.

Nach einer besonders vorteilhaften Ausführungsform der Erfindung kann vorgesehen sein, dass der Werkstückträger in dem Druckbereich als ein kegelförmiger oder dornförmiger Körper ausgebildet ist. Durch die kegelförmige Ausformung des Werkstückträgers wird die Verlagerung des Druckkopfes unterhalb des Werkstücks ermöglicht, da dieses auf dem kegelförmigen Werkstückträger beginnend und von dem kegelförmigen Werkstückträger in Richtung der Werkstückachse gedruckt wird.

Der kegelförmige Körper kann dazu genutzt werden, um einen Ansatzdruck zu erstellen. Dieser dient zur Verbindung des Werkstückträgers mit dem eigentlichen Werkstück und wird nach Fertigstellung des Druckvorgangs üblicherweise entfernt werden. Ein Vorteil in der Erstellung eines Ansatzdruckes liegt in einer freien Gestaltung der Kontaktfläche zwischen dem Werkstückträger und dem Werkstück mit der Möglichkeiten zur Optimierung der Werkstückhaftung, der Gestaltung der Werkstückgrundebene, des (automatisierten) Werkstückauswurfs nach Abschluss des Druckvorgangs, einer freien Materialwahl für die Kontaktfläche zwischen Werkstück und dem Werkstückträger.

Optional kann vorgesehen sein, dass der Körper des Werkstücks abweichend zum kegelförmigen Körper andere geometrische Ausbildungen haben kann.

Optional können so genannte "warping"-Effekte, d.h. thermische Verformungen von Teilen des Werkstück beim Druckvorgang reduziert werden, wenn ein Aufbringen des Druckmaterials in diesem Bereich des Werkstücks beim Druckvorgang abgeändert wird im Vergleich zur statischen CAD-Vorlage des Werkstücks. Die erfindungsgemäße Anordnung der Druckköpfe und des Werkstückträgers ermöglicht derartigen, verzugskompensierenden Druckmaterialauftrag auch im Bereich der Grundebene des zu druckenden Werkstücks aufzubringen, da es möglich ist Druckmaterial im Bereich und insbesondere auch unterhalb der Grundebene des zu druckenden Werkstücks zu platzieren.

Vorzugsweise kann nach einem optionalen Aspekt der Erfindung vorgesehen sein, dass der kegelförmige oder dornförmige Körper in dem Druckbereich des Werkstückträgers Stufen aufweist. Der somit stufenkegelförmige Körper des Werkstückträgers bieten dem Druckmaterial während des Druckvorgangs mehr Haftung, sodass mit dem Abkühlen des Druckmaterials während des Druckvorgangs die einzelnen Bahnen sich zur Werkstückachse hin zusammenziehen und mittels der Stufen von einem Abrutschen oder Ablösen von dem kegelförmigen Körper gehindert werden; das Druckmaterial ergibt eine Presspassung gegen die Stufen des kegelförmigen Körpers. Zudem wird die Gesamtoberfläche zwischen dem Werkstückträger und dem Werkstück(ansatz) vergrößert.

Der Werkstückträger kann beispielsweise auch in anderen, vielfältige Geometrien ausgebildet sein, um die genannten Vorteile zu erreichen. Denkbar sind elliptische oder spiralförmige Geometrien bzw. Formen mit Aussparungen, Bohrungen, Hinterschneidungen und Kombinationen derartiger Geometrien.

Nach einer vorteilhaften Ausführungsform der Erfindung kann vorgesehen , dass die Vorrichtung zumindest eine Sensoreinheit aufweist, die mit der Steuereinheit signaltechnisch verbunden ist, mit der das Werkstück in dem Druckbereich sensorisch erfassbar ist. Mittels den zusätzlichen, sensorisch erfassten Messwerten des zu druckenden Werkstücks kann die Steuereinheit regelnd in den Fertigungsprozess einwirken.

Stellgrößen, die durch die Steuereinheit zur Beeinflussung des Endergebnisses genutzt werden können, können hierbei Einheiten zum Druckmaterialauf- bzw. abtrag, Einheiten zur Oberflächenverbesserung und -veredelung umfassen. Zudem erlaubt es die sensorische Erfassung der Istkontur des Werkstücks auch eine Korrektur der Sollkonturvorgaben derart, dass Fehler in der Fertigung des Werkstücks über eine Veränderung der Sollvorgaben kompensiert werden. Diese Kompensation kann im Nachgang - mit Wirkung für die Fertigung zukünftiger Bauteile - oder aber auch im laufenden Prozess erfolgen.

Nach einer besonders vorteilhaften Ausgestaltung der Erfindung kann vorgesehen sein, dass zumindest die Druckkopfbahn, die in Richtung der Druckachse ausgerichtet ist, mindestens zwei Druckköpfe aufweist. Optional können die mehreren Druckköpfe auf jeder Druckkopfbahn relativ zueinander geneigt sein.

Vorzugsweise kann optional vorgesehen sein, dass der Druckkopf zumindest zwei Druckdüsen aufweist. Die Druckdüsen können dabei einzeln angesteuert werden.

Offenbart ist auch ein Verfahren zum Steuern einer Vorrichtung für dreidimensionale additive Druckoperationen gemäß des unabhängigen Anspruchs 11, das dadurch gekennzeichnet ist, dass der mindestens eine Druckkopf während eines Druckvorgangs entlang einer zur Werkstückachse geneigten Druckachse verlagert wird.

Nach dem erfindungsgemäßen Verfahren reduziert sich der Aufwand zur Berechnung der Druckkopfbahnen auf nur eine Dimension pro Druckkopf - die Druckachse. Während sich der Werkstückträger im Druckbereich entlang der Werkstückachse verlagern und/oder um diese drehen kann, ist es ausreichend, wenn der Druckkopf entlang seiner Druckachse auf dem Werkstückträger und/oder auf das Werkstück die Bahnen des Druckmaterials aufbringt. Optional oder alternativ kann vorgesehen sein, dass die Druckkopfbahnen entlang der Werkstückachse verlagert werden, um dieselben Bereiche des Werkstücks zu erreichen.

Damit der Druckkopf auch unterhalb des zu druckenden Werkstücks verlagerbar ist, kann nach einer Ausgestaltung der Erfindung vorgesehen sein, dass in dem Druckbereich als Werkstückträger ein kegelförmiger oder dornförmiger Körper verwendet wird.

Nach einer vorteilhaften Ausführungsform des erfindungsgemäßen Verfahren kann vorgesehen sein, dass zusätzlich zu dem Druckmaterial Glasfaser und/oder Karbonfaser verwendet werden. Mit der Verwendung von Glasfasern oder Karbonfasern kann das zu druckende Werkstück zusätzlich stabilisiert werden bzw. dessen Materialfestigkeit erhöht werden.

Vorzugsweise kann vorgesehen sein, dass in einem Druckbereich als Werkstückträger ein kegelförmiger oder dornförmiger Körper mit Stufen verwendet wird. An den Stufen des stufenkegelförmigen Körpers kann das aufgebrachte Druckmaterial besser haften und droht nicht Gefahr von dem kegelförmigen Körper abzurutschen. Die abkühlenden Bahnen des gedruckten Druckmaterials ziehen sich radial in Richtung der Werkstückachse zusammen und bilden eine Presspassung, da sie von den Stufen daran gehindert werden sich in die axiale Richtung der Werkstückachse zu verformen.

Um mehr Freiheitsgrade während des Druckvorgangs zu ermöglichen, kann nach einem Aspekt des erfindungsgemäßen Verfahrens vorgesehen sein, dass die Druckköpfe und der Werkstückträger mittels der Steuereinheit unabhängig voneinander gesteuert werden.

Vorzugsweise kann vorgesehen sein, dass das Werkstück während des Druckvorgangs mittels einer Sensoreinheit, die mit der Steuereinheit signaltechnisch verbunden ist, erfasst wird. Mittels der Sensoreinheit kann die Steuereinheit regelnd in den Druckvorgang eingreifen und die wesentlichen Druckparameter an den jeweiligen Druckvorgang anpassen.

Das erfindungsgemäße Verfahren umfasst weitere Merkmale, die optional denkbar sind, aber nicht explizit genannt sind, um eine erfindungsgemäße Vorrichtung zu steuern und zu regeln.

Nachfolgend wird die Erfindung exemplarisch anhand von schematischen Darstellungen gezeigt. Es zeigen:
Figur 1 eine Seitenansicht einer erfindungsgemäßen Vorrichtung,
Figur 2 eine konzeptionelle Darstellung der Vorrichtung in Figur 1,
Figur 3 eine schematische Darstellung einer "warping"-Kompensation,
Figur 4 eine Draufsicht eines kegelförmigen Werkstückträgers und
Figur 5 einen Schnitt A-A in Figur 4.

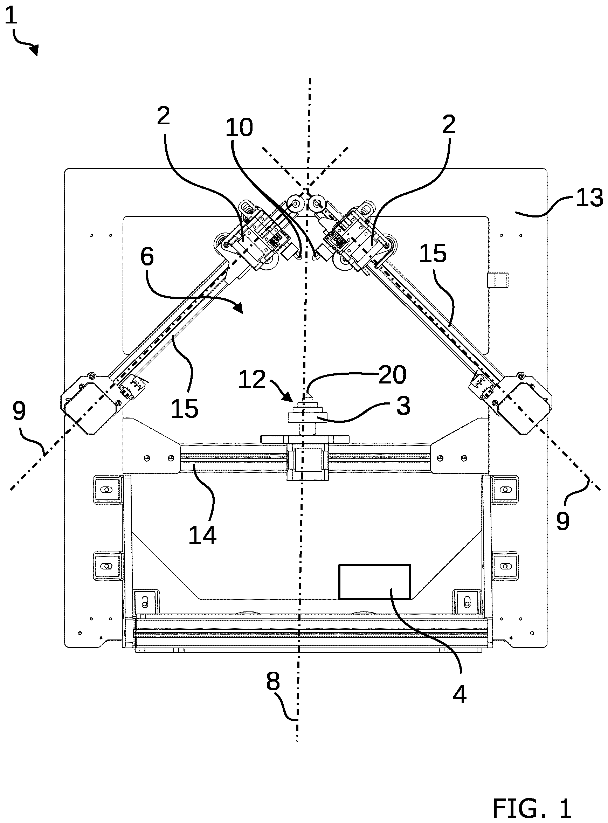

Figur 1 zeigt eine erfindungsgemäße Vorrichtung 1 für dreidimensionale additive Druckoperationen mit einem Rahmen 13, der mittig einen Druckbereich 6 aufweist, in dem ein horizontale Verbindungselement 14 angeordnet ist und an dem Rahmen 13 befestigt ist. Mittig an dem Verbindungselement 14 ist ein Werkstückträger 3 in Ausgestaltung eines kegelförmigen Körpers mit Stufen 12 befestigt, wobei der Werkstückträger 3 als Basis für ein zu druckendes Werkstück bestimmt ist.

Schräg durch den Druckbereich 6 über dem Werkstückträger 3 sind zwei gegenüberliegende Druckköpfe 2 angeordnet, die sich jeweils entlang einer Druckachse 9 auf ihren Druckkopfbahnen 15 bewegen. Druckdüsen 10 der Druckköpfe 2 können dabei einen Endpunkt oberhalb des Werkstückträgers 3 erreichen, bei dem sie eine Werkstückachse 8 des Werkstückträgers 3 mit den Druckachsen 9 der Druccköpfe 2 in einem Winkel größer oder ungleich 0° und kleiner oder ungleich 90°, oftmals zwischen 10° und 80° schneiden.

Während eines Druckvorgangs ist der Werkstückträger 3 entlang der Werkstückachse 8 verlagerbar und/oder um diese drehbar sowie die Druckköpfe 2 entlang ihrer Druckachsen 9 bzw. ihrer Druckkopfbahnen 15 verlagerbar, wobei jeder Druckkopf 2 mittels einer Druckdüse 10 ein Druckmaterial 7 auf der Werkstückträger 3 aufbringen kann, sodass das Werkstück schichtweise herstellbar ist.

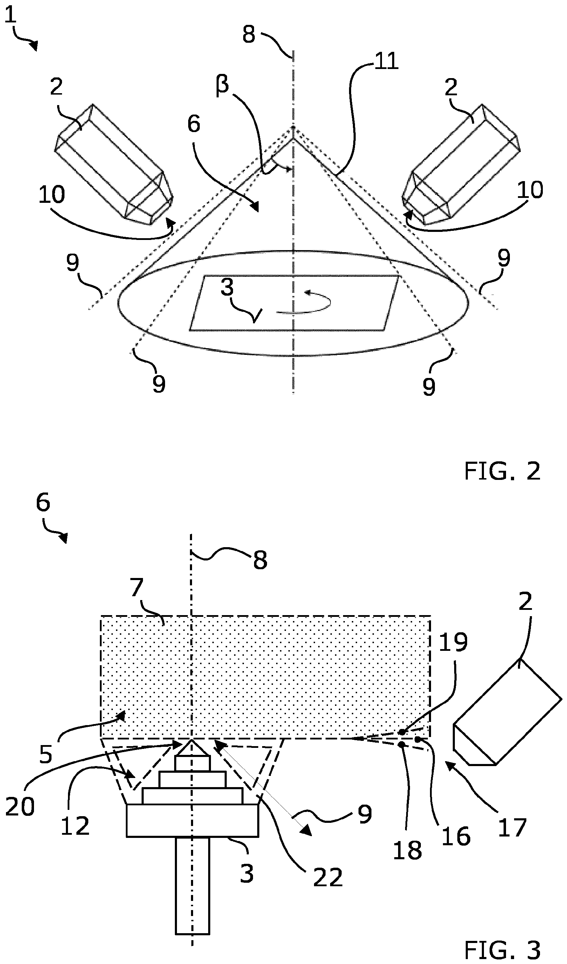

In Figur 2 ist eine konzeptionelle Darstellung der Vorrichtung 1 in Figur 1 mit den zwei sich gegenüberliegenden Druckköpfen 2 dargestellt, die über dem Werkstückträger 5 angeordnet sind sowie entlang ihrer Druckachsen 9 verlagerbar sind. Die Druckachsen 9 schließen mit der Werkstückachse 8 einen Schenkelwinkel β ein, wobei um den Werkstückträger 3 mehrere Druckköpfe 2 mit mehreren Druckachsen 9 angeordnet werden können, die in Figur 2 gestrichelt angedeutet sind.

Figur 3 zeigt den stufenkegelförmigen Werkstückträger 3 auf der das Werkstück 5 angeordnet bzw. mittels des Druckkopfs 2 gedruckt wird, der sich entlang der Druckachse 9 bewegen kann. Damit das Werkstück 5 ausreichend gut von dem Werkstückträger 3 gehalten wird, wird zunächst ein Werkstücksockel 22 aus dem Druckmaterial 7 auf dem Werkstückträger 3 aufgedruckt. Der Werkstücksockel 22 ist während des Druckvorgangs integraler Bestandteil des Werkstücks 5, wird aber nach dem Druckvorgang wieder abgetrennt.

Dargestellt ist in einer unteren rechten Ecke des Werkstücks 5 ein geplanter Ideal-Druckverlauf 16 eines Überhangs 17 des Werkstücks 5, ein abweichender Fehler-Druckverlauf 19 sowie ein Korrektur-Druckverlauf 18. Die erfindungsgemäße Anordnung des Druckkopfes 2 mittels der zur Werkstückachse 8 geneigten Druckachse 9 ermöglicht es dem Druckkopf 2 sich entlang seiner Druckachse 9 unter das zu druckende Werkstück 5 zu positionieren, sodass aus dieser unteren Position ein Druckmaterial 7 mittels des Druckkopfes 2 gemäß dem Korrektur-Druckverlauf 18 auf das Werkstück 5 aufgebracht werden kann, um den sogenannten "warping"-Effekt zu kompensieren, d.h. eine thermische Verformung des Werkstücks 5, bei der das Werkstück 5 einen temperaturbedingten Verzug aufweist.

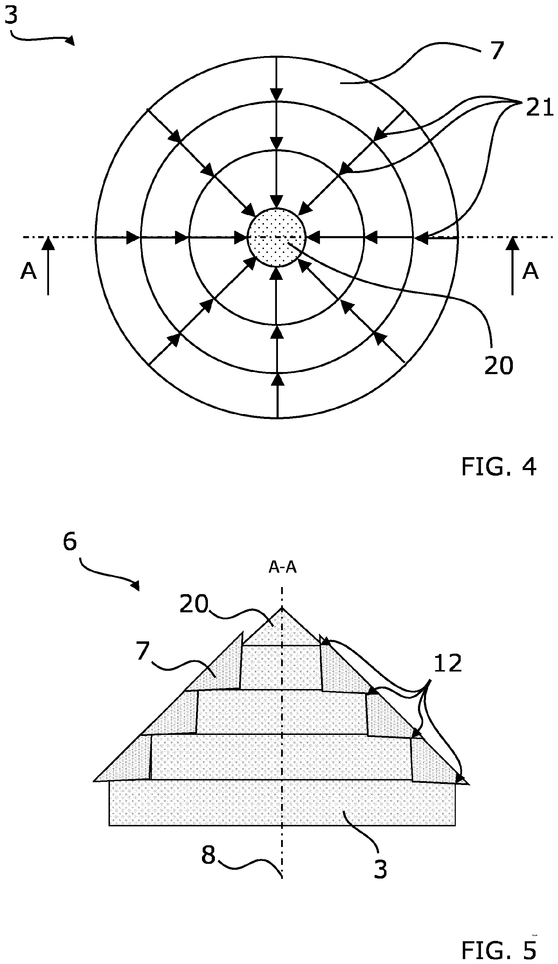

In Figur 4 ist eine Draufsicht eines erfindungsgemäßen Werkstückträgers 3 gezeigt, der beispielhaft als kegelförmiger Körper ausgebildet ist, wobei Figur 5 den Schnitt A-A zeigt. Auf dem Werkstückträger 3, der als kegelförmiger Körper ausgebildet ist und eine konische Spitze 20 aufweist, wird insbesondere zu Beginn des Druckvorgangs das erste Druckmaterial 7 aufgebracht, bis ein stützender Sockel vorhanden ist, auf den das eigentliche Werkstück 5 gedruckt werden kann.

Figur 4 zeigt die konische Spitze 20 mit dem aufgebrachten Druckmaterial 7, das abkühlt und sich radial mit einer Abkühlkraft 21 zusammenzieht. Dabei ziehen sich nicht alle Teile des aufgebrachten Druckmaterials 7 gleichzeitig und gleichmäßig zusammen, vielmehr sind die äußeren Schichten noch weich, während die inneren Schichten schon ausgehärtet sind. Dadurch entsteht bei der in Figur 4 dargestellten Anordnung beim Abkühlen eine Presspassung mittels eines Kraft- und Formschlusses. Die erzielte Pressung kann zu einer besseren Haftung der Schichten aufeinander und/oder zu einer besseren Haftung des Werkstücks 5 bzw. des Werkstückansatzes/Werkstücksockels auf dem Werkstückträger 3 beitragen.

Figur 5 zeigt den Schnitt A-A der Draufsicht der Figur 4. Neben der Presspassung des Druckmaterials 7 als bindendes Element, wirkt sich der Stufenkegel des Werkstückträgers 3 vorteilhaft auf die Haltewirkung der Bahnen und Schichten des Druckmaterials 7 aus. Das abkühlende und abgekühlte Druckmaterial 7 schmiegt sich gegen die Stufen, die verhindern, dass die Schichten des Druckmaterials 7 vom kegelförmigen Körper rutschen.

### Bezugszeichenliste

- 1: Vorrichtung
- 2: Druckkopf
- 3: Werkstückträger
- 4: Steuereinheit
- 5: Werkstück
- 6: Druckbereich
- 7: Druckmaterial
- 8: Werkstückachse
- 9: Druckachse
- 10: Druckdüse
- 11: Kegelmantelfläche
- 12: Stufen
- 13: Rahmen
- 14: Verbindungselement
- 15: Druckkopfbahn
- 16: Ideal-Druckverlauf
- 17: Überhang
- 18: Korrektur-Druckverlauf
- 19: Fehler-Druckverlauf
- 20: Spitze
- 21: Abkühlkraft
- 22: Werkstücksockel
- β: Schenkelwinkel

## Patentansprüche

1. Vorrichtung (1) für dreidimensionale additive Druckoperationen mit mindestens einem Druckkopf (2) und mit einem Werkstückträger (3), auf der mittels des Druckkopfs (2) sowie anhand von Steuerbefehlen mindestens einer Steuereinheit (4) ein Werkstück (5) herstellbar ist, wobei in einem Druckbereich (6) Druckmaterial (7) aus dem Drucckopf (2) auf den Werkstückträger (3) und/oder auf das Werkstück (5) aufbringbar ist und wobei der Werkstückträger (3) entlang mindestens einer Werkstückachse (8) verlagerbar ist und/oder um die mindestens eine Werkstückachse (8) drehbar ist, **dadurch gekennzeichnet, dass** der mindestens eine Druckkopf (2) entlang einer zur Werkstückachse geneigten Druckachse (9) verlagerbar ist.

2. Vorrichtung (1) nach Anspruch 1, **dadurch gekennzeichnet, dass** der Druckkopf (2) mit seiner Druckdüse (10) in Richtung der Druckachse (9) mindestens bis zur Werkstückachse (8) verlagerbar ist.

3. Vorrichtung (1) nach Anspruch 1 oder 2, **dadurch gekennzeichnet, dass** der Druckkopf (2) mit seiner Druckdüse (10) in Richtung der Druckachse (9) mindestens bis unterhalb dem Werkstückträger (3) verlagerbar ist.

4. Vorrichtung (1) nach einem der vorstehenden Ansprüche, **dadurch gekennzeichnet, dass** mindestens zwei Druckköpfe (2) entlang zumindest einer Kegelmantelfläche (11) um den Druckbereich (6) herum angeordnet sind, wobei jeder Druckkopf (2) entlang seiner Druckachse (9) verlagerbar ist.

5. Vorrichtung (1) nach Anspruch 4, **dadurch gekennzeichnet, dass** die Druckdüsen (10) der mindestens zwei Druckköpfe (2) unterschiedliche Düsendurchmesser und/oder Düsengeometrien aufweisen aufweisen.

6. Vorrichtung (1) nach einem der vorstehenden Ansprüche, **dadurch gekennzeichnet, dass** der Werkstückträger (3) in dem Druckbereich (6) als ein kegelförmiger oder dornförmiger Körper ausgebildet ist.

7. Vorrichtung (1) nach Anspruch 6, **dadurch gekennzeichnet, dass** der kegelförmige oder dornförmige Körper in dem Druckbereich (6) der Werkstückauflage Stufen (12) aufweist.

8. Vorrichtung (1) nach einem der vorstehenden Ansprüche, **dadurch gekennzeichnet, dass** die Vorrichtung (1) zumindest eine Sensoreinheit aufweist, die mit der Steuereinheit (4) signaltechnisch verbunden ist, mit der das Werkstück (5) in dem Druckbereich (6) mittels Sensoren erfassbar ist.

9. Vorrichtung (1) nach einem der vorstehenden Ansprüche, **dadurch gekennzeichnet, dass** zumindest eine Druckkopfbahn (15), die in Richtung der Druckachse (9) ausgerichtet ist, mindestens zwei Druckköpfe (2) aufweist.

10. Vorrichtung (1) nach einem der Ansprüche 2 bis 9, **dadurch gekennzeichnet, dass** der Druckkopf (9) zumindest zwei Druckdüsen (10) aufweist.

11. Verfahren zum Steuern einer Vorrichtung (1) für dreidimensionale additive Druckoperationen mit mindestens einem Druckkopf (2) und mit einer Werkstückauflage (3), auf der mittels des Druckkopfs (2) sowie anhand von Steuerbefehlen mindestens einer Steuereinheit (4) ein Werkstück (5) herstellbar ist, wobei der Druckkopf (2) zur Werkstückauflage (3) hin in einen Druckbereich (6) verlagert wird, wobei anschließend ein Druckmaterial (7) mittels einer Druckdüse (10) des Druckkopfs (2) auf die Werkstückauflage (3) und/oder das Werkstück (5) aufgebracht wird während die Werkstückauflage (3) entlang mindestens einer Werkstückachse (8) verlagert wird und/oder um die mindestens eine Werkstückachse (8) gedreht wird, **dadurch gekennzeichnet, dass** der mindestens eine Druckkopf (2) während eines Druckvorgangs entlang einer zur Werkstückachse (8) geneigten Druckachse (9) verlagert wird.

12. Verfahren nach Anspruch 11, **dadurch gekennzeichnet, dass** zusätzlich zu dem Druckmaterial (7) Glasfaser und/oder Karbonfaser verwendet werden.

13. Verfahren nach Anspruch 11 oder 12, **dadurch gekennzeichnet, dass** in einem Druckbereich (6) als Werkstückauflage (3) ein kegelförmiger oder dornförmiger Körper mit Stufen (12) verwendet wird.

14. Verfahren nach einem der Ansprüche 11 bis 13, **dadurch gekennzeichnet, dass** die Druckköpfe (2) und die Werkstückauflage (3) mittels der Steuereinheit (4) unabhängig voneinander gesteuert werden.

15. Verfahren nach einem der Ansprüche 11 bis 14, **dadurch gekennzeichnet, dass** ein Arbeitskopf zum Kontrollieren, Korrigieren und/oder Veredeln einer Oberfläche des Werkstücks verwendet wird.
